# EUROPÄISCHE PATENTANMELDUNG

(11) **EP 1 093 096 A2**
(43) Veröffentlichungstag der Anmeldung: **18.04.2001**
(21) Anmeldenummer: 00117383.0
(22) Anmeldetag: 24.08.2000
(51) Int. Cl.: G07F 19/00, G07F 7/10

(54) **Verfahren und Anordnung zur sicheren Abwicklung von E-Commerce Bezahlvorgängen über Kreditkarten**

(30) Priorität: 11.10.1999 DE 19950391
(71) Anmelder: Deutsche Telekom AG, 53113 Bonn (DE)
(72) Erfinder: Benner, Alexander, 56068 Koblenz (DE)

(57) **Zusammenfassung**

Bei der erfindungsgemäßen Lösung werden dem Kunden Kreditkartennummern mit den dazugehörigen Zuordnungsnummern (ZON) im Rahmen eines ZON-Blockes für ein Kreditkartenunternehmen übermittelt. Nach Anforderung einer Kreditkartenummer wird vom Anbieter des Verfahrens nach Prüfung der Berechtigung eine Zuordnungsnummer (ZON) und ein Gültig-bis-Datum an den Kunden (1) übermittelt. Aufgrund der eindeutigen Zuordnung von Zuordnungsnummer und Kreditkartennummer steht dem Kunden (1) somit eine virtuelle Kreditkarte zur Verfügung. Die Kreditkartennummer, Herstellerausweis und das Gültig-bis-Datum der Kreditkartennummer werden gleichzeitig automatisch an das am Verfahren beteiligte Bankhaus übermittelt. Vom Bankhaus werden die vom Kunden getätigten Bezahlvorgänge validiert und es wird ein Rechnungssatz erstellt und an den Anbieter des Verfahrens übermittelt, welcher die Rechnungslegung gegenüber dem Kunden (1), die Einziehung des Rechnungsbetrages von der kontoführenden Bank des Kunden (1) und die Überweisung des Rechnungsbetrages an das am Verfahren beteiligte Bankhaus, welches die Rechnungen begleicht, veranlaßt.

## Beschreibung

Das erfindungsgemäße Verfahren bezieht sich auf die Absicherung von Bezahlvorgängen mittels Kreditkarten, insbesondere bei Inanspruchnahme von E-Commerce gestützten Dienstleistungen, die durch Diensteanbieter über Kommunikationsverbindungen bereitgestellt werden. Darunter sind insbesondere Dienstleistungen zu verstehen, die über das Internet angeboten werden.

Viele potentielle Kunden, welche beispielsweise Dienstleistungen von Internet-Providern in Anspruch nehmen möchten, zweifeln die Sicherheit bei Bezahlvorgängen mit Kreditkarten über das Internet an. Insbesondere fürchten Sie, daß die Anonymität ihrer Kreditkartennummer nicht gewährleistet ist.

Aufgabe der erfindungsgemäßen Lösung ist es daher, den Kunden ein sicheres Verfahren zur Abwicklung von Bezahlvorgängen über Kommunikationsverbindungen anzubieten, welches die Anonymität der Kreditkartennummer des Kunden gewährleistet.

Das oben genannte Verfahren, das auf einer virtuellen Kreditkarte beruht, wird dem Kunden vorzugsweise als Dienstleistung eines Diensteanbieters in Verbindung mit einer Bank und/oder mindestens einem Kreditkartenunternehmen angeboten.

Erfindungsgemäß werden dem Kunden, welcher an elektronisch gestützten Bezahlvorgängen, beispielsweise über das Internet, teilnehmen möchte, von diesem Diensteanbieter kundenindividuell eine definierte Anzahl von Kreditkartennummern mit dazugehörigen Codenummern in Form eines ZON-Blocks übermittelt. Ein ZON-Block enthält als Codenummern sogenannte Zuordnungsnummern, ZON. Den Zuordnungsnummern sind Kreditkartennummern zugeordnet, wobei gewährleistet sein muß, das jeder Zuordnungsnummer ZON, immer eine Kreditkartennummer eindeutig zugeordnet ist und diese somit eindeutig kennzeichnet.

Im einfachsten Fall wird dem Kunden ein ZON-Block, beispielsweise per Einschreiben, zugesendet.
Der Kunde hat die ihm in Form eines ZON-Blockes übergebenen Daten wie sein Paßwort zu behandeln und insbesondere gegen unbefugten Zugriff zu schützen. Neben dem Kunden verfügt aus Gründen der Geheimhaltung nur der Anbieter/Dienstleister, der dem Kunden die Kreditkartennummern im Rahmen des ZON-Blockes übergeben hat, über einen identischen Datensatz.

Wenn der Kunde einen Zahlvorgang, beispielsweise über das Internet, tätigen will, so nimmt er mit der dafür vorgesehene Stelle des Dienstleisters/Anbieters über ein vereinbartes Medium, wie beispielsweise E-Mail, Verbindung auf und beantragt dort die Freigabe einer sich auf seinem ZON-Block befindlichen Kreditkartennummer. Dem Kunden wird von der zuständigen Stelle des Dienstleisters/Anbieters als Antwort automatisch eine Zuordnungsnummer ZON und das Gültig-bis-Datum für die durch die Zuordnungsnummer ZON eindeutig definierte Kreditkartennummer mitgeteilt. Gleichzeitig wird die zu der Zuordnungsnummer ZON gehörige Kreditkartennummer, deren Gültig-bis-Datum, der Herstellerausweis und Zusatzinformationen an das am Verfahren beteiligte Bankhaus übermittelt. Das Bankhaus weist danach, bedingt durch den Inhalt der Zusatzinformationen (Mail-Datum/-Zeit und Verwendbarkeitshäufigkeit), den definierten Zeitrahmen aus, in welchem diese Kreditkartennummer bebuchbar ist. Der Zeitrahmen wird/wurde durch Vereinbarungen zwischen dem Anbieter (hier Telekom/T-Online) und dem Bankhaus festgelegt und ist dem E-Commerce-Kunden (Kunde 1) bekannt.
Der Zeitrahmen für die Verwendbarkeit einer Kreditkartennummer läßt sich prinzipiell frei vereinbaren. Eine zweckmäßige Festlegung wäre beispielsweise ein Verwendbarkeitszeitraum von 24 Stunden, beginnend mit dem Mail-Datum/-Zeit der automatischen Mailantwort an den Kunden (ZON, Gültig-bis-Datum). Möglich ist es auch, für die Kreditkartennummer nur die Verwendung eines einzigen Bezahlvorganges innerhalb des festgelegten Verwendbarkeitszeitraumes zuzulassen.

Durch unterschiedliche Festlegung der Verwendbarkeitshäufigkeit, beispielsweise der Beschränkung auf nur einen Bezahlvorgang, kann dem Sicherheitsbedürfnis des Kunden in großem Maße Rechnung getragen werden.
Nach erreichen der maximal zulässigen Verwendbarkeitshäufigkeit innerhalb des Verwendungszeitraums (z.B. 24 Std.) wird die Kreditkartennummer von der kontoführenden Stelle für einen bestimmten Zeitraum, wie beispielsweise 3 Monate, deaktiviert um eine korrekte Abrechnung gewährleisten zu können. Für Kaufwünsche nach Ablauf des Verwendbarkeitszeitraumes der betreffenden Kreditkartennummer, bzw. nach erreichen der maximal zulässigen Verwendbarkeitshäufigkeit, muß der Kunde wieder die Zuweisung einer neuen Kreditkartennummer entsprechend der zuvor beschriebenen Verfahrensweise beantragen.

In das erfindungsgemäße Verfahren sind der Kunde, der Anbieter des neuen Dienstes, ein Bankhaus und ein oder mehrere Kreditkartenunternehmen einbezogen. Voraussetzung ist, daß zwischen den am Verfahren beteiligten Parteien die rechtlichen Bedingungen geregelt sind. Das Kreditkartenunternehmen (z.B. VISA) dient nur als Generierer der Kreditkartennummern (Nummernkontingente, nach dem Zufallsprinzip) für das Bankhaus und als Transmitter (Durchleitstation) der Buchungsanfrage des Anbieters im Internet an das Bankhaus und wieder zurück. Auf die zuletzt genannte Weise erfolgt die Überprüfung der Bebuchbarkeit der vom Kunden beim Anbieter im Internet eingegebenen Kreditkartennummer für das Kreditkartenunternehmen als 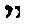 Hersteller der Kreditkarten" in Verbindung mit dem eingegebenen Gültig-bis-Datum der "virtuellen Kreditkarte".

Das erfindungsgemäße Verfahren wird anhand eines Ausführungsbeispiels für die Inanspruchnahme von Diensteistungen im Rahmen von T-Online gestützten Datendiensten näher erläutert
- Fig. 1: zeigt ein Beispiel für den Aufbau der Systemarchitektur für den Anbieter des erfindungsgemäßen Verfahrens,
- Fig. 2: zeigt ein Beispiel für den Aufbau der Systemarchitektur für das am Verfahren beteiligte Bankhaus,
- Fig. 3: zeigt ein Beispiel für das Versenden eines ZON-Blockes an einen am Verfahren beteiligten Kunden 1,
- Fig. 4: zeigt ein Beispiel für die Identifikation des Kunden 1 und des von ihm Verwendeten ZON-Blocks Nr. X,
- Fig. 5: zeigt ein Beispiel für die Auswahl einer Kreditkartennummer für den Kunden 1 und
- Fig. 6: zeigt die Abrechnungsprozesse für einen durch den Kunden 1 über eine Kreditkartennummer getätigten Kauf.

Die entsprechend der beschriebenen Verfahrensweise vorgenommene kundenindividuelle Zuweisung von zeitlich begrenzten Kreditkartennummern (inkl. Gültig-bis-Datum) wird vorzugsweise als eine neue Dienstleistung konzipiert, die dem Kunden angeboten wird.
Der Anbieter der Dienstleistung kann, wie im Ausführungsbeispiel beschrieben, der Betreiber einer Zugangsplattform zum Internet, wie beispielsweise T-Online der Deutschen Telekom AG in Verbindung mit einem Bankhaus und einem Kreditkartenunternehmen sein.

Grundlage des Verfahrens ist, daß der Kunde dem Anbieter der Dienstleistung, hier T-Online, vorab mitgeteilt hat, daß er im Internet an E-Commerce oder ähnlichen Diensten teilnehmen möchte, bei denen die Abrechnung elektronisch über Kreditkartennummern erfolgt, und daß der Kunde diese Dienstleistung beantragt. T-Online, schließt mit dem Kunden einen Vertrag über die Teilnahme am neuen Dienst ab, welcher auch die Genehmigung zur Einholung einer 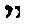 Schufa-Auskunft" beinhaltet und holt gleichzeitig vom betreffenden Kunden eine Einzugsermächtigung für dessen Konto ein.

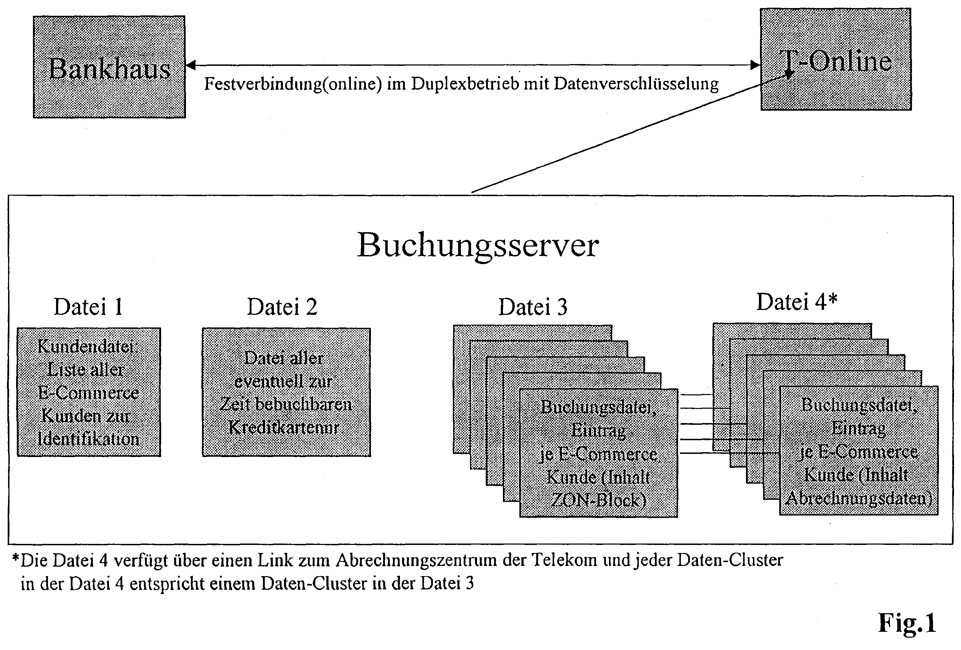

Entsprechend Fig. 1 ist das Bankhaus vorzugsweise über eine Onlineverbindung im Duplexbetrieb mit Datenverschlüsselung, mit dem Anbieter (hier T-Online der Deutschen Telekom AG) verbunden. T-Online hat Zugriff auf einen Buchungsserver, der vier Dateien, Datei 1 bis Datei 4, enthält.
Die Datei 1 ist als Kundendatei ausgebildet und enthält die Liste aller E-Commerce Kunden zur Identifikation.

Dateninhalte der Datei 1 sind die Kunden-Nummer, die Identifikations-/Codenummer, der Name des Kunden, die E-Mail-Adresse und die als Verrechnungsnummer der Telekom AG ausgebildete Fernmeldekontonummer des Kunden.
Die Datei 2 ist die Datei aller eventuell zur Zeit bebuchbaren Kreditkartennummern. Die Datei 2 beinhaltet die Kreditkartennummer, den Herstellerausweis, das Verwendbar-ab-Datum und das Verwendbar-bis-Datum aller zur Zeit bebuchbaren Kreditkartennummern.
Die Datei 3 ist als Buchungsdatei für den Eintrag je E-Commerce Kunden ausgebildet. Datei 3 beinhaltet die Kunden-Nummer, die Kreditkartennummer, die ZON, den Herstellerausweis, Angaben zur Verwendbarkeitshäufigkeit, die Nummer des ZON-Blockes, die Gültigkeit des ZON-Blockes, das Gültig-bis-Datum, das Mail Datum in Verbindung mit der Mail Zeit und die Anzahl der noch bebuchbaren Kreditkartennummern je z.Zt. gültigem ZON-Block.
Die Datei 4 ist als Buchungsdatei für die Einträge von Abrechnungsdaten je E-Commerce Kunden ausgebildet. Sie enthält als Daten die Kunden-Nummer, die Kreditkartennummer, den Herstellerausweis, die Nummer des ZON-Blockes, die Gültigkeit des ZON-Blockes, das Gültig-bis-Datum, die Fernmeldekontonummer des Kunden, das Kaufdatum in Verbindung mit der Kaufzeit, das Mail Datum in Verbindung mit der Mail Zeit, den Verwendungszweck und den Buchungsbetrag.
Die Datei 4 verfügt über einen Link zum Abrechnungszentrum der Deutschen Telekom AG und jeder Daten-Cluster in der Datei 4 entspricht einem Daten-Cluster in der Datei 3. Die Dateien 4 und 3 lassen sich somit unter Umständen zusammenfassen.

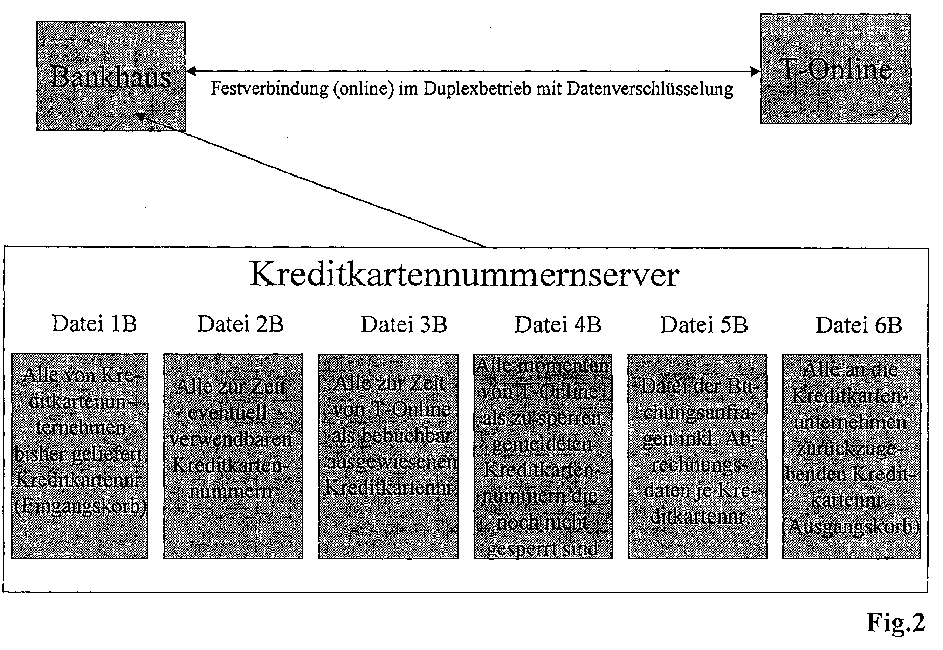

Wie in Fig. 2 abgebildet, hat das am Verfahren beteiligte Bankhaus Zugriff auf einen Kreditkartennummernserver mit 6 Dateien (Datei 1B bis Datei 6 B).
Die Datei 1B dient als Eingangskorb für alle von am Verfahren beteiligten Kreditkartenunternehmen gelieferten Kreditkartennummern. Sie enthält die Kreditkartennummer, den Herstellerausweis der Kreditkartennummer, das Verwendbar-ab-Datum und das Verwendbar-bis-Datum.
Die Datei 2B enthält von allen zur Zeit eventuell verwendbaren Kreditkartennummern die Kreditkartennummer, den Herstellerausweis, das Verwendbar-ab-Datum und das Verwendbar-bis-Datum.

Die Datei 3B enthält von allen zur Zeit von T-Online als bebuchbar ausgewiesenen Kreditkartennummern die Kreditkartennummer, den Herstellerausweis, das Gültig-bis-Datum, die Counter 1 (Kontrolle 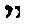 Gültig-bis-Datum") und 2 (Kontrolle 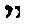 Verwendbarkeitshäufigkeit"), das Mail-Datum in Verbindung mit der Mail-Zeit, Angaben zur Verwendbarkeitshäufigkeit, das Kauf-Datum in Verbindung mit der Kauf-Zeit, den Verwendungszweck und den Kaufbetrag.
Die Datei 4B enthält von allen zur Zeit von T-Online als 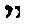 zu sperren" gemeldeten Kreditkartennummern die Kreditkartennummer und den Herstellerausweis der betreffenden Kreditkartennummer und dient nur als Zwischenspeicher, solange bis in der Datei 2B das Verwendbar-ab-Datum verändert wurde, bzw. der komplette Datensatz aus der Datei 2B in die Datei 6B verschoben wurde.
Die Datei 5B ist als Datei der korrekten Buchungsanfragen inklusive der Abrechnungsdaten der Kreditkartennummer ausgebildet und enthält die Kreditkartennummer, den Herstellerausweis, das Gültig-bis-Datum, das Mail-Datum in Verbindung mit der Mail-Zeit, Angaben zur Verwendbarkeitshäufigkeit, das Kaufdatum in Verbindung mit der Kaufzeit, den Verwendungszweck und den Kaufbetrag.
Die Datei 6B ist als Ausgangskorb für alle an die Kreditkartenunternehmen zurückzugebenden Kreditkartennummern ausgebildet. Die Datei 6B enthält die Kreditkartennummer und den Herstellerausweis der betreffenden Kreditkarten.

Nachfolgend wir der Verfahrensablauf näher beschrieben:
Das Bankhaus gibt Kontingente an Kreditkartennummern, die es beispielsweise von einem oder mehreren Kreditkartenunternehmen erhalten hat, an die Telekom/T-Online ab und weist auf Veranlassung der Telekom/T-Online durch einen Kundenauftrag (z.B. E-Mail) eine Kreditkartennummer in Verbindung mit einem "Gültig-ab-Datum" als bebuchbar aus. Erfolgt eine Buchungsanfrage für eine im Kontingent der Telekom enthaltene Kreditkartennummer (Datei 2B) die von der Telekom in Datei 3B nicht als bebuchbar ausgewiesen ist oder wird mehrmals (z.B. 3 mal) ein falsches Gültig-bis-Datum für eine momentan bebuchbare Kreditkartennummer (Datei 3B) eingegeben, so wird in der Datei 2B des Kreditkartennummernservers im Bankhaus der zu dieser Kreditkartennummer gehörende Datensatz dahingehend verändert, daß sein Verwendbar-ab -Datum im Vergleich zum Tagesdatum um 3 Monate erhöht wird.

Sollte die Kreditkartennummer bereits in der Datei 3B des Kreditkartennummernservers enthalten sein, weil sie zuvor von T-Online als bebuchbar ausgewiesen wurde, so wird sie dort gelöscht (Löschung des kompletten Datensatzes). Sollte zudem durch die Erhöhung des Verwendbar-ab-Datums um 3 Monate das Verwendbar-bis-Datum erreicht oder sogar überschritten werden, dann wird der zu dieser Kreditkartennummer gehörende Datensatz von der Datei 2B des Kreditkartennummernservers in die Datei 6B verschoben. Die Datei 6B enthält alle 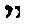 verbrauchten" Kreditkartennummern und wird zyklisch (z.B. jeden Tag) oder azyklisch (z.B. bei erreichen von 50 Datensätzen, d.h. von 50 verbrauchten Kreditkartennummern) an den Hersteller (z.B. VISA) übertragen. Nach erfolgreicher Übertragung werden diese Datensätze in der Datei 6B, die quasi als 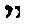 Ausgangskorb" dient, gelöscht. Die Datei 4B dient als Auffangbecken für die von T-Online gemeldeten Kreditkartennummern, die vorübergehend zu sperren sind (d.h. deren Verwendbar-ab-Datum um 3 Monate im Vergleich zum Tagesdatum in der Datei 2B heraufgesetzt wird, soweit dies vom Verwendbar-ab-Datum her möglich ist). Bei Erreichen oder Überschreiten des Verwendbar-bis-Datums wird der komplette Datensatz aus der Datei 2B in die Datei 6B verschoben. Der komplette Datensatz in der Datei 4B wird, nach der Änderung des Verwendbar-ab-Datums in der Datei 2B bzw. nach der evtl. Verschiebung der Daten von der Datei 2B in die Datei 6B, gelöscht.

Über eine Online-Verbindung (Duplexbetrieb mit Datenverschlüsselung) wird, wie in Fig. 1 abgebildet, auf einen Buchungsserver zugegriffen. Die Datei 2B des Kreditkartennummernservers wird dort mit der Datei 2 des Buchungsservers verbunden und aktualisiert dann auf diese Weise dort automatisch die Datensätze. Beide Dateien sind daher vom Dateninhalt identisch.
Der Buchungsserver besteht aus vier Speicherbereichen (Dateien):
In der Datei 1 ist die Kundendatei der am Verfahren beteiligten Kunden gespeichert. Die Kundendatei enthält Daten, die eine Kundenidentifikation eindeutig ermöglichen. In Datei 2 sind alle zur Zeit eventuell bebuchbaren Kreditkartennummern für die am Verfahren beteiligten Kunden gespeichert. Datei 3 ist als Buchungsdatei ausgebildet und enthält die Einträge je E-Commerce Kunden hinsichtlich seiner erhaltenen Kreditkartennummern (ZON-Block und Herstellerausweis) und der vom Kunden für einen ZON-Block angeforderten Kreditkartennummern, mit dem jeweiligen Gültig-bis-Datum, dem Tagesdatum und der Uhrzeit zum Zeitpunkt der an den Kunden versendeten Mail.
Die Datei 4 enthält die Abrechnungsdaten, die aus der Datei 5B des in Figur 2 abgebildeten Kreditkatennummernserver über eine Onlineverbindung üb ertragen wurden. Die Dateien 3 und 4 enthalten somit kundenbezogene Cluster innerhalb derer nur die Daten eines Kunden abgespeichert sind. Im konkreten Fall enthält die Datei 3 die Daten des ZON-Blockes/der ZON-Blöcke und die Datei 4 die kundenspezifischen Abrechnungsdaten mit einem Link zum Abrechnungszentrum der Telekom AG. Zwischen dem Anbieter (T-Online) und dem am Verfahren beteiligten Bankhaus besteht zur Übermittlung der Daten eine Datenverbindung, vorzugsweise eine Festverbindung (Online) im Duplexbetrieb mit Datenverschlüsselung.

In Fig. 2 ist die Systemarchitektur für das am Verfahren beteiligte Bankhaus abgebildet. Das Bankhaus hat Zugriff auf einen Kreditkartennummernserver, welcher sechs Speicherbereiche 1B bis 6B enthält.
Die Datei 1B, die als Eingangskorb ausgebildet ist, enthält in Form eines Nummernkataloges eine Aufstellung aller bisher von Kreditkartenunternehmen gelieferten Kreditkartennummern mit systemtechnischen Zusatzinformationen (Herstellerausweis, Verwendbar-ab- und Verwendbar-bis-Datum). Das Verwendbar-ab-Datum entspricht dem Tagesdatum der Datenlieferung, und das Verwendbar-bis-Datum wird mit Tagesdatum der Datenlieferung + 2 Jahre gesetzt.
Die Datei 2B enthält alle zur Zeit eventuell bebuchbaren Kreditkartennummern. Alleiniges Kennzeichen für eine momentan bebuchbare Kreditkartennummer ist die Überprüfung ob das Tagesdatum im Zeitrahmen des Verwendbar-ab- bis Verwendbar-bis-Datum liegt.
Von der Datei 1B werden täglich alle neu hinzugekommenen Kreditkartennummern (kompletter Datensatz) in die Datei 2B kopiert. Die Plausibilitätsprüfung wird hierbei im Rahmen des Vergleichs des Tagesdatums in Bezug zum Verwendbar-ab-Datums jeder vorhandenen Kreditkartennummer durchgeführt.
Datei 3B enthält eine Aufstellung aller zur Zeit von T-Online als bebuchbar gemeldeten Kreditkartennummern mit dem jeweiligen Gültig-bis-Datum, dem Herstellerausweis und Zusatzinformationen.

Die Datei 4B enthält die vom Buchungsserver gemeldeten Kreditkartennummern, die zu sperren sind und deren Verwendbar-ab-Datum daraufhin um 3 Monate in Bezug auf das Tagesdatum in der Datei 2B nach oben zu korrigieren ist, soweit das möglich ist. Wird dabei jedoch das neue Verwendbar-ab-Datum größer oder gleich dem Verwendbar-bis-Datum, dann wird der komplette Datensatz für diese Kreditkartennummer von der Datei 2B in die Datei 6B der 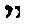 verbrauchten" Kreditkartennummern verschoben und ist somit über die Onlineverbindung auch im Buchungsserver in der Datei 2 nicht mehr vorhanden. Nach dem Erhöhen des Verwendbar-ab-Datums bzw. nach dem eventuellen Verschieben des Datensatzes von der Datei 2B in die Datei 6B wird der komplette Datensatz in der Datei 4B gelöscht.

Die Datei 5B enthält die korrekten Buchungsanfragen der Anbieter im Internet. Der Rechner überprüft jede eintreffende Buchungsanfrage auf Plausibilität durch die in der Datei 3B abgelegten Daten. Kriterien der Prüfling auf Plausibilität der eintreffenden Buchungsanfrage sind Kreditkartennummer, Hersteller, Gültig-bis-Datum, Verwendbarkeitshäufigkeit und das von T-Online zur Ermittlung des Verwendbar-keitszeitraums übermittelte Mail Datum in Verbindung mit der Mail Zeit. Bei festgestellter Plausibilität wird die Meldung 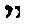 gültig" an den Anbieter im Internet zurückgeschickt und der Kauf-Auftrag des Kunden kann danach abgewickelt werden. Dies geschieht, indem diese Daten von der Datei 3B in die Datei 5B des Kreditkartennummernserver übertragen und zeitgleich (online) an den Buchungsserver übertragen und dort in der Datei 4 abgespeichert werden. Der Datensatz, an dem die Plausibilitätsprüfung in der Datei 3B durchgeführt wurde, wird nach Übersteigen der maximal zulässigen Verwendbarkeitshäufigkeit (Counter 2 in der Datei 3B über Maximalwert) oder nach Ablauf der Verwendbarkeitsdauer dort gelöscht. Führt die Buchungsanfrage zu keiner vollständigen Übereinstimmung (Plausibilität) bei einem Datensatz in der Datei 3B, dann wird die Meldung 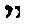 ungültig" an den Anbieter im Internet übermittelt. War nur das Gültg-bis-Datum falsch dann wird in der Datei 3B ein Counter 1 (Beginnzustand 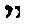 0") um 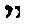 1" erhöht. Bei Erreichen einer definierten Anzahl an Fehlversuchen (Counter 1 z.B. auf 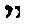 3") wird der Datensatz aus der Datei 3B gelöscht. Dem für diese Kreditkartennummer frei geschalteten Kunden wird automatisch eine neue E-Mail zugesendet mit einem Hinweis, daß eine neue ZON (Kreditkartennummer) mit dem ebenfalls neu übermittelten Gültig-bis-Datum aus systemtechnischen Gründen zu verwenden ist. In der Datei 2B wird das Verwendbar-bis-Datum um 3 Monate in Bezug zum Tagesdatum erhöht, insoweit dies möglich ist. Gleiches gilt auch für eine Buchungsanfrage für eine Kreditkartennummer eines Herstellers, die nur in der Datei 2B enthalten ist (Erhöhung des Verwendbar-ab-Datums insoweit dies möglich ist).
Die Datei 6B enthält alle 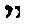 verbrauchten" Kreditkartennummern und überwacht die Rücklieferung der Kreditkartennummern an die Lieferanten die durch die Herstellerausweise der betreffenden Kreditkartennummern eindeutig gekennzeichnet sind. Die Lieferung kann z.B. monatlich zu jedem 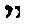 1". des Monates erfolgen. Die erfolgreich zurückgegebenen Datensätze werden daraufhin in der Datei 6B gelöscht.

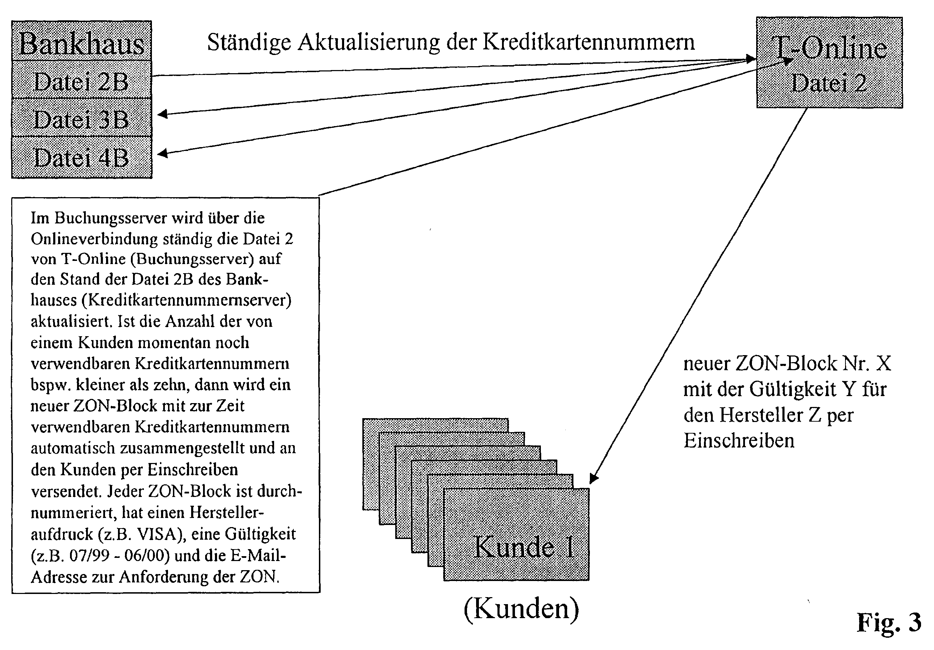

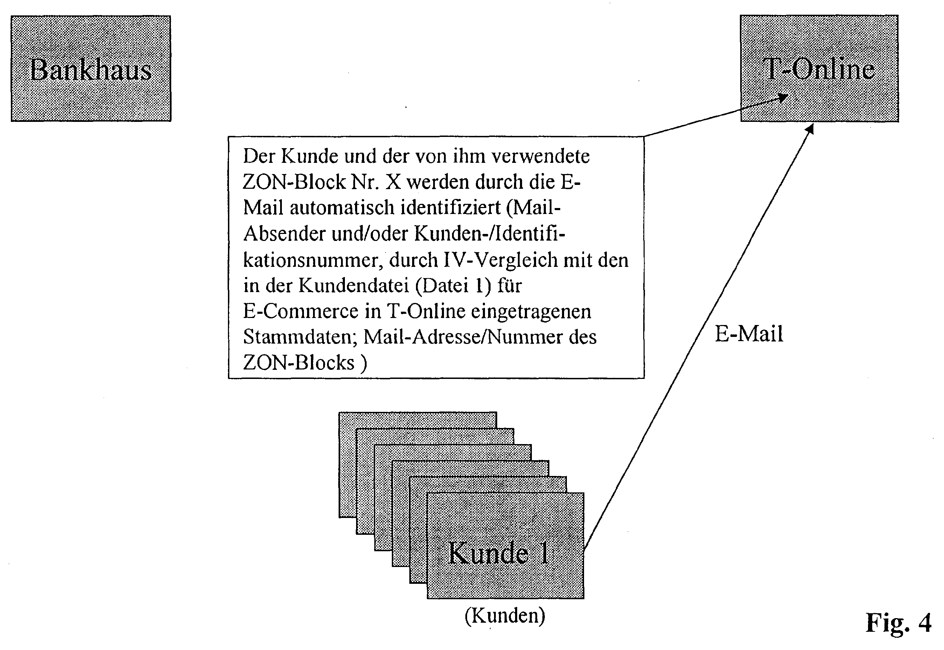

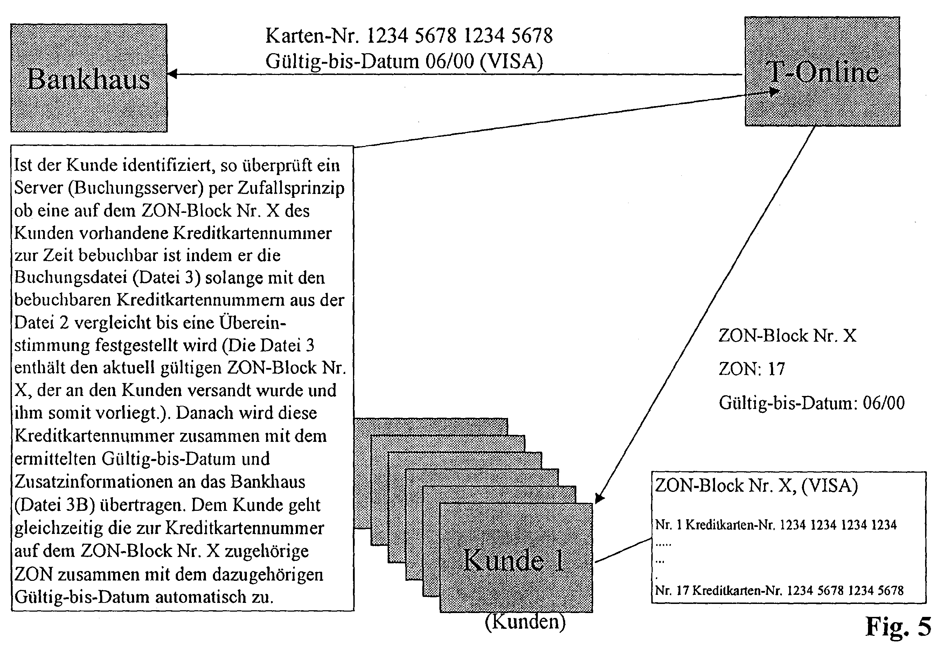

Zum Start des erfindungsgemäßen Verfahrens wird dem Kunden ein ZON-Block mit beispielsweise 100 Kreditkartennummern und den dazugehörigen Zuordnungsnummern ZON's, vorzugsweise per Einschreiben, übersendet. Jeder ZON-Block hat zudem noch eine fortlaufende Nummer, weist einen Hersteller (z.B. VISA) eindeutig aus, enthält einen Hinweis auf die Gültigkeit dieses ZON-Blocks (Gültigkeitskeitsdauer z.B. 1 Jahr) und die E-Mail-Adresse zum Anfordern der Zuordnungsnummer ZON (inkl. Gültig-bis-Datum) für eine bebuchbare Kreditkartennummer.
Gemäß Fig. 3 vergleicht der Buchungsserver von T-Online täglich alle auf jedem zur Zeit gültigen ZON-Block eingetragenen Kreditkartennummern (Datei 3) mit den momentan bebuchbaren Kreditkartennummern aus der Datei 2 anhand des Tagesdatums und des Verwendbarkeitszeitraums jeder einzelnen Kreditkartennummer. Das Ergebnis (die Anzahl) wird in der Datei 3 dokumentiert. Wenn die Anzahl der für einen ZON-Block ermittelten noch bebuchbaren Kreditkartennummern z.B. kleiner 10 ist, erfolgt automatisch die Versendung eines neuen ZON-Blockes mit beispielsweise 100 neuen Kreditkartennummern des gleichen Herstellers (z.B. VISA) und den dazugehörigen 100 Zuordnungsnummern ZON's. Der ZON-Block wird dabei unter Berücksichtigung der auf dem vorhergehenden ZON-Block noch bebuchbaren Nummern automatisch zusammengestellt und an den betreffenden Kunden 1, vorzugsweise per Einschreiben, versendet. Voraussetzung für die Zusammenstellung des neuen ZON-Blocks ist, daß jede dort aufgeführte Kreditkartennummer ein Verwendbar-bis-Datum aufweist, das größer oder gleich der Gültigkeitsdauer des ZON-Blocks, also mindestens 1 Jahr, ist. Jeder neue ZON-Block ersetzt seinen evtl. beim Kunden vorhanden Vorgänger vollständig, und der alte ZON-Block kann daraufhin vom Kunden vernichtet werden. Sollte ein ZON-Block keine z.Zt. bebuchbaren Kreditkartennummern mehr enthalten, dann wir dem Kunden dies in Form einer E-Mail mitgeteilt und ihm wird umgehend ein neuer ZON-Block zugestellt.
Kann der Kunde 1 seinen Zahlungsverpflichtungen nicht mehr nachkommen, dann werden seine Daten aus der Datei 1 des Buchungsservers gelöscht, bzw. er wird dort als nicht mehr solvent gekennzeichnet, und alle auf dem ZON-Block des Kunden noch bebuchbaren Kreditkartennummern werden in die Datei 4B des Kreditkartennummernservers übertragen und dann dort wie zuvor beschrieben behandelt.
Erfindungsgemäß richtet der Kunde bei Vorliegen eines Kaufwunsches, beispielsweise per E-mail, den Wunsch auf Zuweisung einer bebuchbaren Kreditkartennummer an eine speziell für diesen neuen Dienst eingerichtete Adresse. Diese Adresse ist die mit dem Kunden vereinbarte Adresse des Diensteanbieters, hier E-Mail-Adresse von T-Online, untergliedert nach den am Verfahren beteiligten Kreditkartenunternehmen. Wie in Figur 4 abgebildet, wird der Kunde 1 und die Art und Nummer des von ihm verwendeten ZON-Blocks (Hersteller der Kreditkartennummer z.B. VISA) durch die Mail Adresse und die Daten seiner E-Mail automatisch identifiziert. Die Identifizierung geschieht vorzugsweise durch automatische Prüfung der Angaben in der E-Mail im Rahmen eines Vergleichs mit den im Buchungsserver in Datei 1 gespeicherten Kundendaten.
Jeder ZON-Block hat einen bestimmten Gültigkeitszeitraum, an dessen Ende dem Kunden automatisch ein neuer ZON-Block zugestellt wird. Bei abgelaufenen Kreditkartennummern (überschreiten des Verwendbar-bis-Datums in Bezug auf das Tagesdatum), werden diese Kreditkartennummer in der Datei 2B gelöscht und über die Datei 6B des Kreditkartennummernservers an das Kreditkartenunternehmen bei Erreichen einer gewissen Anzahl (z.B. 50 Stück) in Form eines Kontingentes oder zyklisch zurückgesendet. Diese Überprüfung geschieht täglich. Vom Kreditkartenunternehmen werden automatisch neue Kreditkartennummern an das Bankhaus in die Datei 1B des Kreditkartennummernserver eingespielt. Auf diese Weise wird dafür gesorgt, daß die über E-Commerce von T-Online genutzten Kreditkartennummern sich immer im "Fluß", innerhalb des kompletten Nummernvorrates des Kreditkartenunternehmens, befinden. Die Größe des vom Kreditkartenunternehmen über das Bankhaus an den Anbieter dieser Dienstleistung zur Verfügung zu stellende Kontingentes an Kreditkartennummern ist abhängig von der Anzahl der Kreditkartennummern je ZON-Block, der Anzahl der ZON-Blöcke, der Wiederholungshäufigkeit (Wahrscheinlichkeit) für die Verwendung identischer Kreditkartennummern auf unterschiedlichen ZON-Blöcken und der Wachstumsprognose für diese Dienstleistung (Anzahl der in der Datei 1 Buchungsserver eingetragenen Kunden mit X ZON-Blöcken bei einem Kaufverhalten Y heute und zukünftig.).
Wenn der Kunde identifiziert ist, so vergleicht der Buchungsserver solange immer eine nach dem Zufallsprinzip auf dem ZON-Block des Kunden ausgewählte Kreditkartennummer aus der Datei 3, entsprechend Figur 5 in Verbindung mit Figur 1, mit der Datei 2 bis eine verwendbare Kreditkartennummer ermittelt ist. Vergleichsbasis ist hierbei ob das Tagesdatum innerhalb des Verwendbarkeitszeitraumes liegt. Danach wird diese Kreditkartennummer vom Buchungsserver mit einem Gültig-bis-Datum versehen und in die Datei 3B des Kreditkartennummernservers übertragen. Das Gültig-bis-Datum wird vorzugsweise per Zufallsgenerator ermittelt. Das Gültig-bis-Datum sollte aber noch einen gewissen Zeitraum, z.B. mind. 3 Monate, in der Zukunft liegen. Dem Kunden 1 geht daraufhin die zur Kreditkartennummer korrespondierende Zuordnungsnummer ZON des ZON-Blocks Nr. X und das für die Kreditkartennummer zu verwendende Gültig-bis-Datum als E-Mail automatisch zu.

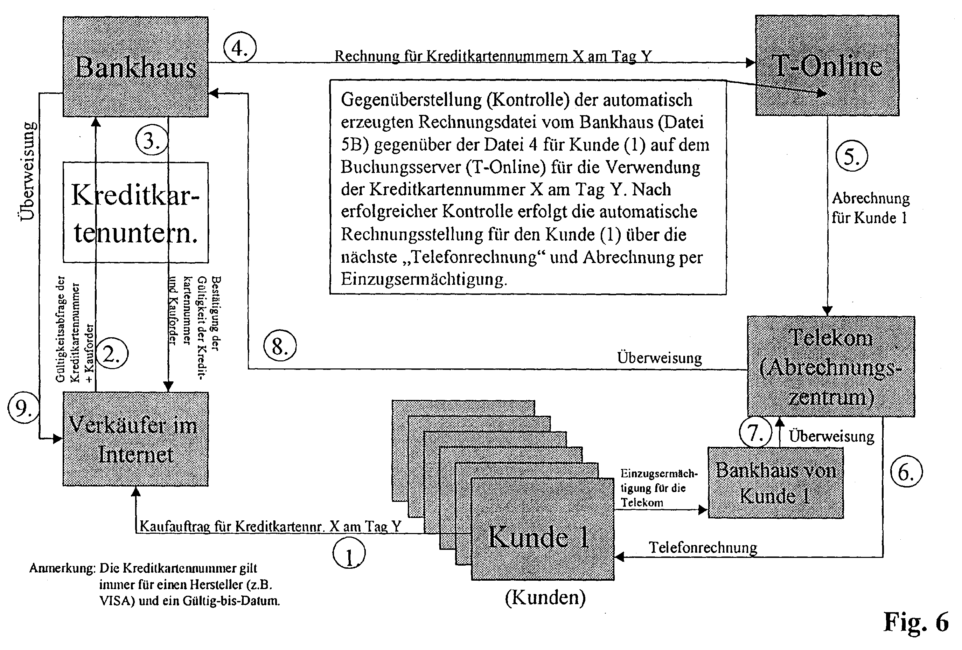

In Fig. 6 ist ein Ablaufschema für die Abrechnungsprozesse über den Kauf des Kunden 1 über eine Kreditkartennummer mit dazugehörigem Gültig-bis-Datums abgebildet.
Wenn ein Kunde 1 im Rahmen von T-Online eine E-Commerce Dienstleistung eines Verkäufers im Internet in Anspruch nehmen möchte und einen entsprechenden Kaufauftrag unter der ihm als bebuchbar benannten Kreditkartennummer, einschließlich Gültig-bis-Datum, auslöst, so wird vom Verkäufer im Internet eine Anfrage über die Bebuchbarkeit der vom Kunden übermittelten Kreditkartennummer in Verbindung mit dem Gültig-ab-Datum über das jeweilige Kreditkartenunternehmen an das Bankhaus gestartet. Wird die Bebuchbarkeit bestätigt, so wird vom Verkäufer im Internet der Kaufauftrag erfüllt. Vom Bankhaus erfolgt die Rechnungslegung über einen Auszug aus der Datei 5B gegenüber T-Online zur Kontrolle ob die in der Datei 5B sich befindenden Abrechnungsdaten auch mit den vergleichbaren Daten in der Datei 4 des Buchungsservers übereinstimme*n*. Dazu werden zyklisch vom Bankhaus über die Festverbindung zu T-Online alle Rechnungen an T-Online übermittelt, die der Kunde 1 über die betreffende Kreditkartennummer im festgelegten Abrechnungszeitraum getätigt hat. Die Rechnung enthält für jeden Vorgang mindestens die Kreditkartennummer, den Herstellerausweis, das Gültig-bis-Datum der Kartennummer, das Kaufdatum in Verbindung mit der Kaufzeit, den Verwendungszweck und den Kaufbetrag. Entsprechend dieser Angaben wird bei vollständiger Übereinstimmung der Daten die Gesamtrechnung für den Kunden 1, basierend auf den Angaben in der Datei 4 des Buchungsservers, erstellt und an das Abrechnungszentrum der Telekom weitergeleitet. Als Bezugsnummer zwischen T-Online und Abrechnungszentrum bietet sich die als Verrechnungsnummer der Telekom ausgebildete Fernmeldekontonummer an. Sie ist in den Stammdaten der E-Commerce-Kunden (Datei 1) gespeichert und auch vom Abrechnungszentrum direkt eindeutig interpretierbar.
Vom Telekom-Abrechnungszentrum wird die Rechnung entweder auf einem Extrablatt zusammen mit der Telefonrechnung oder sogar als gesondert ausgewiesene Position auf der Telefonrechnung an den Kunden übermittelt. Über die Einzugsermächtigung des Kunden erfolgt die Abbuchung des Geldbetrages für die Telefon-/T-Online-Rechnung einschließlich des Betrages für die Begleichung der Rechnung(en) für die verwendete(n) Kreditkartennummer(n) nach einem für Kreditkartenkäufe üblichen Zeitraum. Vom Telekom-Abrechnungszentrum wird der Betrag für die Begleichung der Rechnung(en) für die durch den Kunden 1 in Anspruch genommene(n) Kreditkartennummer(n) an das am Verfahren beteiligte Bankhaus übermittelt. Vom Bankhaus erfolgt die Begleichung der unter den betreffenden Kreditkartennummern gebuchten Rechnungen bei dem/den Verkäufer/n im Internet.

Nachfolgend werden einige Sicherheitsaspekte für das erfindungsgemäße Verfahren beschrieben:
Der Kunde muß sich für die Benutzung des erfindungsgemäßen Verfahrens bei der Telekom (T-Online) anmelden. Bei dieser Anmeldung gelten die gleichen Voraussetzungen wie zur Beantragung einer 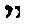 normalen Kreditkarte". Das heißt, daß vom Kunden eine Einzugsermächtigung in Verbindung mit der Genehmigung zur Einholung einer Schufa-Auskunft vorliegt. Der ZON-Block wird vorzugsweise per Einschreiben an den Kunden gesendet. Eine Zuordnungsnummer, ZON für den ZON-Block, bekommt nur ein Teilnehmer, der bei der Telekom als Nutzer der erfindungsgemäßen Dienstleistung registriert ist und sich als solcher auch ausweisen kann. Kontrollinstrument wäre zum Beispiel die E-Mail-Adresse des Kunden. Zur Erhöhung der Sicherheit ist es vorteilhaft, wenn die E-Mail-Adresse des Kunden mit einer speziellen Zugangsnummer, beispielsweise im Betreff der E-Mail, kombiniert wird. Die Zugangsnummer kann jedoch in diesem Zusammenhang auch als alleiniges Kontrollinstrument verwendet werden. Die Sicherheit der Kreditkartennummer läßt sich beispielsweise auch dadurch noch erhöhen, daß sie im Verwendbarkeitszeitraum von beispielsweise 24 Stunden nur einmalig, bebuchbar ist. Dieser Sachverhalt ist jedoch nur dem Kunden und dem Anbieter bekannt, da die Verwendbarkeitshäufigkeit (überprüft durch Counter 2) für die Kreditkarten bei der Beantragung dieser Dienstleistung oder zu einem späteren Zeitpunkt zwischen dem Anbieter und dem Kunden festgelegt wurde. Wann und ob die Kreditkartennummer nach Ablauf ihrer Verwendbarkeit zu einem späteren Zeitpunkt, beispielsweise für einen zweiten Kunden, freigegeben wird, ist durch den 1. Kunden nicht mehr zu ermitteln. Die zuvor in dem Beispiel angegebenen 3 Monate sind nur als ein Richtwert anzusehen. Die Festlegung eines davon abweichenden Zeitrahmens ist durchaus möglich. Beispielsweise ist es denkbar, daß zur Erhöhung der Sicherheit der Zeitrahmen für die erneute Gültigkeit einer Kreditkartennummer durch einen Zufallsgenerator in einem Zufallsbereich für die Ermittlung des Verwendbar-ab-Datum von beispielsweise 2 - 12 Monaten in der Zukunft, bezogen auf das Tagesdatum, vorgegeben wird.
Eine vom Verkäufer im Internet über das Kreditkartenunternehmen an das Bankhaus übermittelte Kreditkartennummer (inkl. Gültig-bis-Datum) kann folgende Eigenschaften aufweisen:
- Die Kreditkartennummer ist für diese Dienstleistung zur Zeit dem Verfahren unbekannt, das heißt, sie ist nicht in der Datei 2B des Kreditkartennummernservers des Bankhauses enthalten. In diesem Fall wird die Meldung 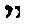 ungültig" zum Verkäufer im Internet zurück übermittelt. Weitere Aktionen finden von Seiten des Anbieters nicht statt.
- Die Kreditkartennummer ist für diese Dienstleistung zur Zeit dem Verfahren bekannt, das heißt, sie ist in der Datei 2B des Bankhauses enthalten. In diesem Fall müssen zwei Zustände unterschieden werden:
   1. Die Kreditkartennummer ist zur Zeit als bebuchbar ausgewiesen, das heißt, sie ist in der Datei 3B des Kreditkartennummernservers des Bankhauses enthalten. In diesem Fall wird das ebenfalls übermittelte Gültig-bis-Datum auf Richtigkeit geprüft. Stimmt es mit dem von T-Online übermittelten Datum überein, dann ist der Kauf zulässig, anderenfalls wird die Meldung 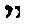 ungültig" zum Verkäufer im Internet zurück übermittelt. Wird dreimal (überprüft durch Counter 1) zu einer als bebuchbar ausgewiesenen Kreditkartennummer das falsche Gültig-bis-Datum übermittelt, dann wird diese Kreditkartennummer in der Datei 3B gelöscht und wenn möglich, in der Datei 2B gesperrt.
   2. Die Kreditkartennummer ist zur Zeit als nicht bebuchbar ausgewiesen, das heißt, sie ist nicht in der Datei 3B des Kreditkartennummernservers des Bankhauses enthalten. In diesem Fall wird diese Kreditkartennummer in der Datei 2B, wenn möglich, gesperrt.
Eine Kreditkartennummer wird gesperrt, indem das Verwendbar-ab-Datum der Kreditkartennummer um beispielsweise 3 Monate im Vergleich zum Tagesdatum erhöht wird. Sollte hierbei das Verwendbar-bis-Datum erreicht oder sogar überschritten werden, dann wird diese Kreditkartennummer von der Datei 2B in die Datei 6B verschoben und mit der nächsten Datenlieferung entsprechend des vorhandenen Herstellerausweises an den Hersteller (Kreditkartenunternehmen) zurückgegeben. Der Kunde selber merkt von diesen Vorgängen nichts, da er auf seine Anforderung immer nur die Zuordnungsnummern ZON von zur Zeit verwendbaren/bebuchbaren Kreditkartennummern seines z.Zt. gültigen ZON-Blocks Nr. X mitgeteilt bekommt. Wenn auf dem ZON-Block Nr. X des Kunden nur noch wenige gültige Kreditkartennummern enthalten sind, so wird dem Kunden automatisch ein neuer ZON-Block Nr. X+1 per Einschreiben zugestellt. Das Risiko für den Kunden besteht dann nur noch darin, daß jemand am gleichen Tag wie der Kunde zufällig die gleiche Kreditkartennummer des gleichen Kreditkartenunternehmens (Hersteller) mit richtigem Gültig-bis-Datum benutzt, wobei Fehleingaben des Gültig-bis-Datums zudem nur begrenzt möglich sind. Dies dürfte für den Kunden in der Regel ein kalkulierbares Risiko sein zumal egal, ob ein falsches Gültig-bis-Datum zur Kreditkartennummer eingegeben wird oder die Kreditkartennummer für den angegebenen Hersteller in der Datei 3B z.Zt. nicht enthalten ist, immer nur die Meldung "ungültig" übertragen wird. Das Risiko geht insbesondere für Kreditkartennummern von Kunden, die zur einmaligen Verwendung im Rahmen eines einzigen Bezahlvorganges bestimmt sind nahezu gegen Null, da sie im Verwendbarkeitszeitraum nur einmalig im Internet übertragen wird. Da die Kreditkartennummern nur auf dem ZON-Block beim Kunden existieren und nur die Zuordnungsnummer (ZON) übermittelt werden muß, braucht zur deren Übermittlung an den Kunden auch keinerlei Verschlüsselung gewählt zu werden, da sie für jeden anderen Internet-Nutzer, außer dem betreffenden Kunden, wertlos ist. Eine weitere zweckmäßige Ausgestaltung der erfindungsgemäßen Lösung wird in der gesicherten Übertragung eines kompletten ZON-Blocks an den Kunden (1) gesehen. Die von T-Online verwendeten Kreditkartennummern gehen nach Ablauf eines gewissen Zeitraums (z.B. 2 Jahre) an den Hersteller (Kreditkartenunternehmen) zurück und andere (neue) Kreditkartennummern stehen über das Bankhaus T-Online für diese Dienstleistung wieder zur Verfügung. Auf diese Weise sind die Kreditkartennummern, bezogen auf das gesamte Kreditkartennummern-Kontingent des betreffenden Kreditkartenunternehmens, in ständigem Umlauf.
Das Anlegen von speziellen Dateien mit Kreditkartennummern zu Manipulationszwecken bietet damit wenig Aussicht auf Erfolg für eine mißbräuchliche Benutzung durch einen Dritten.

Das erfindungsgemäße Verfahren zeichnet sich dadurch aus, daß der Kunde gefahrlos für seine eigene kartengebundene Kreditkartennummer im Internet einkaufen kann, da er durch diese neue Dienstleistung eine spezielle Kreditkartennummer besitzt, die er nur für einen bestimmten Zeitraum, wie beispielsweise einen Tag, 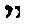 gemietet" hat und deren Hersteller, Ziffernfolge, Gültig-bis-Datum, Verwendbarkeitsdauer und Verwendbarkeitshäufigkeit nur er kennt. Auf diese Weise ist eine 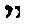 virtuelle Kreditkarte" entstanden, die sich nur temporär auf Anforderung von einem am Verfahren beteiligten Kunden verwenden läßt.

## Patentansprüche

1. Verfahren zur sicheren Abwicklung von E-Commerce Bezahlvorgängen über Kreditkarten für die Inanspruchnahme von Dienstleistungen und/oder Warenkäufen, über ein Kommunikationsnetz, wobei das erfindungsgemäße Verfahren von einem Anbieter in Verbindung mit einem Bankhaus und mindestens einem Kreditkartenunternehmen als Dienstleistung angeboten wird,
**dadurch gekennzeichnet,**
- daß jedem am Verfahren beteiligten Kunden (1 bis n) vom Anbieter des Verfahrens eine definierte Anzahl von Kreditkartennummern mit den dazugehörigen Zuordnungsnummern (ZON) im Rahmen eines ZON-Blockes zur Verfügung gestellt wird, wobei jede Kreditkartennummer durch die ihr zugeordnete Zuordnungsnummer (ZON) eindeutig gekennzeichnet ist,
- daß nach Anforderung einer bebuchbaren Kreditkartenummer durch einen Kunden (1) vom Anbieter des Verfahrens nach Prüfung der Berechtigung des Kunden (1) anhand der in einer ersten Datei (Datei 1) eines Buchungsserver für den Kunden (1) gespeicherten Kundendaten,
a) aus den dem Kunden (1) zur Verfügung gestellten ZON-Block automatisch nach dem Zufallsprinzip eine noch bebuchbare Kreditkartennummern ermittelt wird, und daß dem Kunden (1) die zur Kreditkartennummer gehörende Zuordnungsnummer (ZON) und ein Gültig-bis-Datum über ein geeignetes Medium zugesendet wird, so daß dem Kunden 1 aufgrund der eindeutigen Zuordnung von Zuordnungsnummer (ZON) und Kreditkartennummer in Verbindung mit dem übermittelten Gültig-bis-Datum, eine für einen vereinbarten Zeitraum bebuchbare Kreditkartennummer mit allen für einen Kauf benötigten Zusatzinformationen zur Verfügung steht, daß
b) die Kreditkartennummer und das Gültig-bis-Datum gleichzeitig automatisch an das am Verfahren beteiligte Bankhaus übermittelt werden, und daß die Kreditkartennummer im Bankhaus automatisch für einen vorab festgelegten Zeitraum als bebuchbar ausgewiesen wird,
- daß nach Ablauf des für die Kreditkartennummer vorab festgelegten Zeitraumes die betreffende Kreditkartennummer sowohl beim Anbieter des Verfahrens, als auch bei dem am Verfahren beteiligten Bankhaus automatisch als nicht mehr bebuchbar ausgewiesen wird,
- daß vom Bankhaus automatisch ein Rechnungssatz erstellt und automatisch an den Anbieter des Verfahrens zur Kontrolle übermittelt wird, welcher alle Bezahlvorgänge beinhaltet, die vom Kunden (1) während eines vorab festgelegten Zeitraumes über die betreffende Kreditkartennummer getätigt wurden, und
- daß vom Anbieter des Verfahrens bei vollständiger Übereinstimmung der vom Bankhaus gelieferten Daten mit den bereits vorhanden Daten, automatisch die Rechnungslegung gegenüber dem Kunden (1), die Einziehung des Rechnungsbetrages von der kontoführenden Bank des Kunden (1) und die Überweisung des Rechnungsbetrages an das am Verfahren beteiligte Bankhaus erfolgt, von welchem die Rechnungen des Kunden (1) zu der betreffenden Kreditkartennummer beglichen werden.

2. Verfahren nach Anspruch 1, dadurch gekennzeichnet, daß das am Verfahren beteiligte Kreditkartenunternehmen dem Bankhaus automatisch ein Kontingent an Kreditkartennummern für eine als Überlassungszeitraum festgelegte Zeitspanne von beispielsweise 2 Jahren zur Verfügung stellt, wobei die betreffenden Kreditkartennummern nach Ablauf des Überlassungszeitraumes an das Kreditkartenunternehmen zurückgehen und vom Kreditkartenunternehmen durch ein neues Kontingent von Kreditkartennummern ersetzt werden, von denen innerhalb eines vereinbarten Zeitraumes noch keine Kreditkartennummer für die angebotene Dienstleistung verwendet wurde.

3. Verfahren nach einem der vorhergehenden Ansprüche, dadurch gekennzeichnet, daß jede vom Kreditkartenunternehmen gelieferte Kreditkartennummer mit einem Zeitstempel (Verwendbar-ab-Datum und Verwendbar-bis-Datum) und Herstellerausweis versehen wird, der innerhalb des Überlassungszeitraums der Kreditkartennummer liegt, wobei das 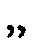 Verwendbar-bis-Datum" am Ende und das 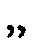 Verwendbar-ab-Datum" am Anfang des Überlassungszeitraumes liegen, und daß das 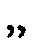 Verwenbar-bis-Datum" als unveränderbares Datum und das 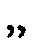 Verwendbar-ab-Datum" als veränderbares Datum konfiguriert sind.

4. Verfahren nach einem der vorhergehenden Ansprüche, dadurch gekennzeichnet, daß jede Kreditkartennummer mit einem als Schlüssel konfigurierten Herstellerausweis versehen ist, der das Kreditkartenunternehmen, von dem sie ausgegeben wurde, eindeutig definiert.

5. Verfahren nach einem der vorhergehenden Ansprüche, dadurch gekennzeichnet, daß der Buchungsserver des Anbieters täglich automatisch die noch bebuchbaren Kreditkartennummer aus einer zweiten Datei (Datei 2) mit der Anzahl der jedem einzelnen Kunden im Rahmen seines ZON-Blockes zugewiesenen Kreditkartennummern aus einer dritten Datei (Datei 3) vergleicht und die Anzahl der für jeden einzelnen Kunden noch bebuchbaren Kreditkartennummern ermittelt, und daß für den Fall, daß die Anzahl der noch bebuchbaren Kreditkartennummern eine als Limit vorgegebene Mindestzahl unterschreitet, automatisch ein neuer ZON-Block zusammengestellt und dem betreffenden Kunden übermittelt wird.

6. Verfahren nach einem der vorhergehenden Ansprüche, dadurch gekennzeichnet, daß die Lieferung der Kreditkartennummern vom Kreditkartenunternehmen an das Bankhaus, bzw. vom Bankhaus an das Kreditkartenunternehmen zurück, automatisch und vorzugsweise in zyklischen Abständen erfolgt.

7. Verfahren nach einem der vorhergehenden Ansprüche, dadurch gekennzeichnet, daß durch das Bankhaus bei Überschreiten einer definierten Anzahl der in einer sechsten Datei (Datei 6B) des Kreditkartennummernserver noch vorhandenen zurückzugebenden Kreditkartennummern bzw. bei Unterschreiten einer definierten Anzahl der in einer zweiten Datei (Datei 2B) gespeicherten zur Zeit noch verwendbaren Kreditkartennummern, automatisch eine Aufforderung zur Lieferung von Kreditkartennummern an das Kreditkartenunternehmen ausgelöst wird.

8. Verfahren nach einem der vorhergehenden Ansprüche, dadurch gekennzeichnet, daß bei Eingabe einer nicht für die Buchung freigegebenen Kreditkartennummer durch einen Kunden bzw. einen Dritten, bei Geltendmachung der Kreditkartennummer gegenüber dem Bankhaus über das Kreditkartenunternehmen, die betreffende Kreditkartennummer automatisch im Kreditkartennummernserver des Bankhauses in der zweiten Datei (Datei 2B) für eine Benutzung gesperrt wird, und daß das Verwenbar-ab-Datum, bezogen auf das aktuelle Tagesdatum, um 3 Monate erhöht wird, wobei für den Fall, daß das Verwendbar-ab-Datum dann identisch oder größer als das Verwenbar-bis-Datum der Kreditkartennummer ist, die betreffende Kreditkartennummer automatisch von der zweiten Datei (Datei 2B) in die sechste Datei (Datei 6B) verschoben und von dort mit der nächsten Datenlieferung an das Kreditkartenunternehmen zurückgegeben wird.

9. Verfahren nach einem der vorhergehenden Ansprüche, dadurch gekennzeichnet, daß jede Veränderung der Daten in der zweiten Datei (Datei 2B) des Kreditkartennummernserver des Bankhauses automatisch dazu führt, daß über eine Online-Verbindung, vorzugsweise eine Standleitung, im Buchungsserver des Anbieters (T-Online) in der zweiten Datei (Datei 2) eine Datenaktualisierung stattfindet, so daß die Daten der zweiten Datei (Datei 2) des Buchungsservers immer identisch mit den Daten der zweiten Datei (Datei 2B) des Kreditkartennummernservers sind.

10. Verfahren nach einem der vorhergehenden Ansprüche, dadurch gekennzeichnet, daß die Anforderung nach einer bebuchbaren Kreditkartennummer vom Kunden (1) an eine E-Mail-Adresse des Anbieters des erfindungsgemäßen Verfahrens übermittelt wird, und daß automatisch die Zuordnungsnummer (ZON) für eine als bebuchbar ausgewiesenen Kreditkartennummer, inklusive des dazugehörigen Gültig-bis-Datums, an die E-Mail-Adresse des betreffenden Kunden (1) gesendet und gleichzeitig über eine Online-Verbindung (Standleitung) zum Bankhaus übertragen und dort in eine dritte Datei (Datei 3B) des Kreditkartennummernservers eingespeichert wird, wobei jedes Einspeichern einer neuen Kreditkartennummer in die dritte Datei (Datei 3B) des Kreditkartennummernservers automatisch zu einer Erhöhung des Verwendbar-ab-Datum dieser Kreditkartennummer um 3 Monate in Bezug zum Tagesdatum in der zweiten Datei (Datei 2B) des Kreditkartennummernservers führt.

11. Verfahren nach einem der vorhergehenden Ansprüche, dadurch gekennzeichnet, daß jedem am Verfahren beteiligten Kreditkartenunternehmen eine eigene E-Mail-Adresse zugeordnet ist.

12. Verfahren nach einem der vorhergehenden Ansprüche, dadurch gekennzeichnet, daß das Gültig-bis-Datum zu jeder Kreditkartennummer per Zufallsgenerator ermittelt wird, wobei jedoch Werte, die bezogen auf das Tagesdatum weniger als 4 Monate in der Zukunft liegen, automatisch von der Vergabe ausgeschlossen sind.

13. Verfahren nach einem der vorhergehenden Ansprüche, dadurch gekennzeichnet, daß der Systemaufbau der am Verfahren beteiligten Komponenten Anbieter, Bankhaus und Kreditkartenunternehmen unter der Bedingung veränderbar ist, daß bei Wegfall beispielsweise einer Komponente die Aufgaben der entfallenen Komponente von den noch verbliebenen Systemkomponenten übernommen werden, wenn sie nicht redundant sind.

14. Verfahren nach einem der vorhergehenden Ansprüche, dadurch gekennzeichnet, daß der Verwendbarkeitszeitraum einer für den Kunden (1) freigegebenen Kreditkartennummer auf 24 Stunden festgelegt ist

15. Verfahren nach einem der vorhergehenden Ansprüche, dadurch gekennzeichnet, daß die für den Kunden (1) freigegebene Kreditkartennummer für eine einmalige Anwendung innerhalb des Verwendbarkeitszeitraumes konzipiert ist.

16. Verfahren nach einem der vorhergehenden Ansprüche, dadurch gekennzeichnet, daß die freigegebene Kreditkartennummer mindestens für eine zweimalige Anwendung innerhalb des Verwendbarkeitszeitraumes konzipiert ist.

17. Verfahren nach einem der vorhergehenden Ansprüche, dadurch gekennzeichnet, daß die Zuordnungsnummern und die Kreditkartennummern als Datenfile so zum Kunden bzw. an eine vom Kunden benannte Stelle übertragen und dort gespeichert werden, daß der Kunde die richtige Zuordnung von Zuordnungsnummern zu Kreditkartennummern auf einem ZON-Block anhand eines ihm gesondert übermittelten oder zur Verfügung gestellten Programms vornehmen kann.

18. Anordnung zur sicheren Abwicklung von E-Commerce Bezahlvorgängen über Kreditkarten für die Inanspruchnahme von Dienstleistungen und/oder Warenkäufen, über ein Kommunikationsnetz, unter Einbeziehung eines Anbieters in Verbindung mit einem Bankhaus und mindestens einem Kreditkartenunternehmen,
**dadurch gekennzeichnet,** daß das am Verfahren beteiligte Bankhaus über eine Datenleitung mit dem Anbieter des Verfahrens, vorzugsweise dem Betreiber einer Datenplattform im Internet (T-Online), verbunden ist, daß der Anbieter Zugriff auf einen Buchungsserver mit 4 als separate Speicherbereiche ausgebildeten Dateien (Datei 1 bis 4) hat, wobei
- die erste Datei (Datei 1) als Kundendatei ausgebildet ist und zur Identifikation die Liste aller E-Commerce Kunden mit der Kunden-Nummer, der Identifikations-/Codenummer, dem Name des Kunden, der E-Mail-Adresse und der Fernmeldekontonummer des Kunden enthält,
- die zweite Datei (Datei 2) als Datei aller eventuell zur Zeit bebuchbaren Kreditkartennummern ausgebildet ist, welche die Kreditkartennummer, den Herstellerausweis, das Verwendbar-ab-Datum und das Verwendbar-bis-Datum aller zur Zeit evtl. bebuchbaren Kreditkartennummern enthält,
- die dritte Datei (Datei 3) als Buchungsdatei für den Eintrag je E-Commerce Kunden ausgebildet ist und die Kunden-Nummer, die Kreditkartennummer, die ZON, den Herstellerausweis, Angaben zur Verwendbarkeitshäufigkeit, die Nummer des ZON-Blockes, die Gültigkeit des ZON-Blockes, das Gültig-bis-Datum, das Mail Datum in Verbindung mit der Mail Zeit und die Anzahl der momentan noch bebuchbaren Kreditkartennummern je z.Zt. gültigem ZON-Block enthält,
- die vierte Datei (Datei 4) als Buchungsdatei für die Einträge von Abrechnungsdaten je E-Commerce Kunden ausgebildet ist und die Kunden-Nummer, die Kreditkartennummer, den Herstellerausweis, die Nummer des ZON-Blockes, die Gültigkeit des ZON-Blockes, das Gültig-bis-Datum, die als Verrechnungsnummer ausgebildete Fernmeldekontonummer des Kunden, das Mail-Datum in Verbindung mit der Mail Zeit, das Kaufdatum in Verbindung mit der Kaufzeit, den Verwendungszweck und den Buchungsbetrag enthält,
und daß das am Verfahren beteiligte Bankhaus Zugriff auf einen Kreditkartennummernserver mit 6 als separate Speicherbereiche ausgebildeten Dateien (Datei 1B bis 6B) hat, wobei
- die erste Datei (Datei 1B) als Eingangskorb für alle von am Verfahren beteiligten Kreditkartenunternehmen bisher gelieferten Kreditkartennummern ausgebildet ist und die Kreditkartennummer, den Herstellerausweis der Kreditkartennummer/Kreditkarte, das Verwendbar-ab-Datum und das Verwendbar-bis-Datum enthält,
- die zweite Datei (Datei 2B) von allen zur Zeit je nach Verwendbar-ab-Datum eventuell verwendbaren Kreditkartennummern die Kreditkartennummer, den Herstellerausweis, das Verwendbar-ab-Datum und das Verwendbar-bis-Datum enthält,
- die dritte Datei (Datei 3B) von allen zur Zeit von T-Online als bebuchbar ausgewiesenen Kreditkartennummern die Kreditkartennummer, den Herstellerausweis, das Gültig-bis-Datum, den Countern 1 u. 2, das Mail-Datum in Verbindung mit der Mail-Zeit, Angaben zur Verwendbarkeitshäufigkeit, das Kauf-Datum in Verbindung mit der Kauf-Zeit, den Verwendungszweck und den Kaufbetrag enthält,
- die vierte Datei (Datei 4B) von allen zur Zeit von T-Online als zu sperren gemeldeten Kreditkartennummern die Kreditkartennummer und den Herstellerausweis der betreffenden Kreditkartennummer enthält,
- die fünfte Datei (Datei 5B) als Datei der Buchungsanfragen inklusive der Abrechnungsdaten de Kreditkartennummer ausgebildet ist und die Kreditkartennummer, den Herstellerausweis, das Gültig-bis-Datum, das Mail-Datum in Verbindung mit der Mail-Zeit, Angaben zur Verwendbarkeitshäufigkeit, das Kaufdatum in Verbindung mit der Kaufzeit, den Verwendungszweck und den Kaufbetrag enthält, und daß
- die sechste Datei (Datei 6B) als Ausgangskorb für alle an das/die Kreditkartenunternehmen zurückzugebenden Kreditkartennummern ausgebildet ist und die Kreditkartennummer und den Herstellerausweis der betreffenden Kreditkarten beinhaltet.

19. Anordnung nach Anspruch 18, dadurch gekennzeichnet, daß die vierte Datei (Datei 4) des Buchungsservers über einen Link zum Abrechnungszentrum der Deutschen Telekom AG verfügt, und daß jeder Daten-Cluster in der vierten Datei (Datei 4) einem Daten-Cluster in der dritten Datei (Datei 3) entspricht, so daß die Daten der dritten Datei (Datei 3) und die Daten der vierten Datei (Datei 4) auch innerhalb einer Datei angeordnet sein können.
